Europäisches Patentamt

European Patent Office

Office européen des brevets

(19)

(11) Veröffentlichungsnummer: **0 135 888 B1**

(12) **EUROPÄISCHE PATENTSCHRIFT**

(45) Veröffentlichungstag der Patentschrift: **25.09.91**

(51) Int. Cl.⁵: **G06F 12/14**

(21) Anmeldenummer: **84110888.9**

(22) Anmeldetag: **12.09.84**

(54) **Verfahren zur Verhinderung des Ablaufs eines Programms auf für den Ablauf dieses Programms nicht zugelassenen Rechnern.**

(30) Priorität: **29.09.83 DE 3335387**

(43) Veröffentlichungstag der Anmeldung:
**03.04.85 Patentblatt 85/14**

(45) Bekanntmachung des Hinweises auf die
Patenterteilung:
**25.09.91 Patentblatt 91/39**

(84) Benannte Vertragsstaaten:
**AT CH DE FR GB IT LI**

(56) Entgegenhaltungen:
**US-A- 4 120 030**
**US-A- 4 319 079**

**IBM TECHNICAL DISCLOSURE BULLETIN,
Band 20, Nr. 10, März 1978, Seiten 3982-3983,
New York, US; P.N. PRENTICE: "Method of
implementing key chaining"**

**COMPUTER, Band 16, Nr. 2, Februar 1983,
Seiten 55-62, Long Beach, California, US;
D.W. DAVIES: "Applying the RSA digital signature to electronic mail"**

(73) Patentinhaber: **Siemens Aktiengesellschaft**
**Wittelsbacherplatz 2**
**W-8000 München 2(DE)**

(72) Erfinder: **Müller-Schloer, Christian, Dr.**
**Bruderstrasse 2**
**W-8000 München 22(DE)**

## Beschreibung

Die Erfindung bezieht sich auf ein Verfahren zur Verhinderung des Ablaufs eines ursprünglichen Programms auf für den Ablauf dieses Programms nicht zugelassenen Rechnern.

Programme oder Software, die für einen Rechnertyp geschrieben wurden, sind gewöhnlich auf jeder Maschine dieses Rechnertyps ablauffähig. Im Falle eines Verkaufs von Programmen oder bei selektiven Lizenzen soll ein Weitergeben der Programme an Unberechtigte oder ein Kopieren der Programme durch Unberechtigte verhindert werden.

Bisher wurde versucht, das unberechtigte Weitergeben von Programmen mit Hilfe von Verträgen oder durch Blockieren des Kopierbefehls zu verhindern. Diese Verfahren sind jedoch sehr unzuverlässig.

Bei der Datenübertragung über Leitungen ist es bekannt, die Daten zu verschlüsseln, wenn diese geheimgehalten werden sollen. Es sind dabei verschiedene Verschlüsselungsverfahren bekannt geworden. Ein Beispiel dafür ist das DES-Verfahren, das in "FIPS PUB 46 (Federal Information Processing Standard Publication) vom 15 Jan. 1977" erläutert ist. Dieses DES-Verfahren ist weiterhin in "Elektronische Rechenanlagen", 22. Jahrgang 1980, Heft 6, Seite 276 bis 280 und in Electronics/21.6.1979 Seite 107 bis 120 beschrieben. Nachdem DES-Verfahren werden die zu übertragenden Daten auf der Sendeseite mit Hilfe eines Schlüssels so verschlüsselt, daß nur der Empfänger mit demselben Schlüssel diese Daten wieder entschlüsseln kann. Für weitere Einzelheiten wird auf die angegebenen Literaturstellen verwiesen.

Die der Erfindung zugrundeliegende Aufgabe besteht darin, ein Verfahren anzugeben, das gewährleistet, daß ein Programm nur noch auf einem zugelassenen Rechner, dem sog. Zielrechner, laufen kann und das somit verhindert, daß ein Programm auf für den Ablauf dieses Programm nicht zugelassenen Rechnern verwendet wird.

Mit Hilfe der aus der US-Patentschrift 4 319 079 bekannten Schaltungsanordnung wird dies Aufgabe dadurch gelöst, daß einzelne Befehle des ursprünglichen Programms nach dem DES-Verfahren mit Hilfe eines ersten Schlüssels verschlüsselt werden, daß beim Ablauf des Programms im Zielrechner bei Auftreten von verschlüsselten Befehlen diese einem im Zielrechner angeordneten Entschlüsselungsbaustein zugeführt werden, und daß nur der Rechner mit dem Entschlüsselungsbaustein mit dem ersten Schlüssel die verschlüsselten Befehle nach dem DES-Verfahren so entschlüsselt, daß das ursprüngliche Programm wieder entsteht.

Diese Aufgabe wird weiterhin mit Hilfe des in Patentanspruch 1 des vorliegenden Erfindung gekennzeichneten Verfahrens dadurch gelöst, daß das ursprüngliche Programm durch Ersetzen einzelner Befehle durch unrichtige Befehle in ein verändertes Programm umgewandelt wird, daß in einer ersten Tabelle festgehalten wird, welche Befehle unrichtig sind und wie die richtigen Befehle lauten, daß das veränderte Programm mit Hilfe eines ersten Schlüssels zu einer ersten Prüfsumme komprimiert wird, daß die erste Tabelle und die erste Prüfsumme nach einer umkehrbaren kryptografisch sicheren Transformationsfunktion zu einer zweiten Tabelle verknüpft wird, daß das veränderte Programm und die zweite Tabelle den Rechnern zugeführt wird, daß in den Rechnern das veränderte Programm mit einem zweiten Schlüssel zu einer zweiten Prüfsumme komprimiert wird, und daß die zweite Prüfsumme mit der zweiten Tabelle nach der Transformationsfunktion verknüpft wird, wobei als Ergebnis der Verknüpfung nur dann wieder die erste Tabelle entsteht, wenn der zweite Schlüssel mit dem ersten Schlüssel identisch ist.

Die Erzeugung der Prüfsumme kann auf einfache Weise dadurch erfolgen, daß das veränderte Programm in Blöcke aufgeteilt wird, daß der erste Block nach dem DES-Verfahren mit dem Schlüssel zu einem ersten Wert verschlüsselt wird, daß der zweite Block nach dem DES-Verfahren mit dem ersten Wert als Schlüssel zu einem zweiten Wert verschlüsselt wird, daß aufeinanderfolgend jeder bisher nicht behandelte Block des veränderten Programms nach dem DES-Verfahren mit dem Wert der vorhergehenden Verschlüsselung als Schlüssel verschlüsselt wird und daß der Wert der Verschlüsselung des letzten Blockes mit dem Wert der vorhergehenden Verschlüsselung die Prüfsumme darstellt. Zur Erzeugung dem ersten Prüfsumme wird dann der dem ausgewählten Zielrechner zugeordnete Schlüssel verwendet. Diesen Schlüssel verwendet dann auch der Zielrechner bei der Erzeugung der zweiten Prüfsumme, die mit der ersten Prüfsumme identisch sein muß.

Zweckmäßig ist es, als Transformationsfunktion das DES-Verfahren zu verwenden. Dann wird die zweite Tabelle dadurch erzeugt, daß die erste Tabelle in Blöcke aufgeteilt wird, daß jeder Block der ersten Tabelle mit Hilfe der ersten Prüfsumme als Schlüssel nach dem DES-Verfahren verschlüsselt wird und daß die verschlüsselten Blöcke zur zweiten Tabelle zusammengefaßt werden.

Entsprechend wird dann im Zielrechner zur Erzeugung der ersten Tabelle aus der zweiten Tabelle vorgegangen. Hier wird jeder Block der zweiten Tabelle mit Hilfe der zweiten Prüfsumme als Schlüssel nach dem DES-Verfahren entschlüsselt und die entschlüsselten Blöcke zur ersten Tabelle zusammengesetzt.

Die Verschlüsselung bzw. Entschlüsselung der Tabellen und die Erzeugung der Prüfsummen kann in einem Verschlüsselungsbaustein mit einem bekannt aufgebauten DES-Funktionsblock erfolgen. Der Verschlüsselungsbaustein zur Durchführung des Verfahrens gemäß dem unabhängigen Patentspruch 9 besteht dann zweckmäßigerweise aus dem DES Funktionsblock, einem Datenregister, in das die zu bearbeitenden Daten blockweise eingespeichert werden und das mit dem DES Funktionsblock verbunden ist, aus einem Schlüsselregister zur Aufnahme des Schlüssels, das mit dem DES Funktionsblock verbunden ist, und aus einer Steuereinheit, die zur Steuerung mit dem Datenregister, dem DES Funktionsblock und mit dem Schlüsselregister verbunden ist.

Ein Zugriff zum Schlüssel im Zielrechner wird dann verhindert, wenn der Schlüssel in einem von außen nicht lesbaren und von außen nicht löschbaren Festspeicher gespeichert ist, der mit dem Schlüsselregister verbunden ist.

Ein- und derselbe Verschlüsselungsbaustein kann für die Verschlüsselung als auch für die Entschlüsselung verwendet werden, wenn vor dem Schlüsselregister ein mit der Steuereinheit verbundener Multiplexer angeordnet ist, von dem jeweils ein Eingang mit dem Ausgang des DES Funktionsblocks, mit dem Ausgang des Festspeichers und mit

externen Leitungenzum Anlegen eines Schlüssels verbunden ist, wobei in Abhängigkeit eines Steuersignals von der Steuereinheit einer der Eingänge zum Schlüsselregister durchgeschaltet wird.

Das erfindungsgemäße Verfahren setzt somit nur voraus, daß alle Rechner des zu schützenden Typs den Verschlüsselungsbaustein besitzen, der nicht von den Rechnern zu trennen ist. Jedem Rechner wird dabei in dem von außen nicht lesbaren und nicht löschbaren Speicher ein Schlüssel eindeutig zugeordnet. Das zu schützende Programm wird z.B. vom Hersteller nach dem Verfahren so modifiziert, daß eine ablauffähige Version nur auf dem Zielrechner mit dem korrekten Schlüssel entsteht. Das Kopieren des veränderten Programms braucht somit nicht mehr verhindert zu werden, da Kopien für andere als den Zielrechner nutzlos sind.

Anhand eines Ausführungsbeispiels, das in den Figuren dargestellt ist, wird die Erfindung weiter erläutert. Es zeigen

Fig. 1 und Fig. 2
das erfindungsgemäße Verfahren aufgeteilt in einzelne Schritte in einem Ablaufdiagramm,
Fig. 3
Ausschnitte beim Senderechner und beim Zielrechner, die zur Verschlüsselung bzw. Entschlüsselung des Programms verwendet werden,
Fig. 4
einen Aufbau des Entschlüsselungs- bzw. Verschlüsselungsbausteins.

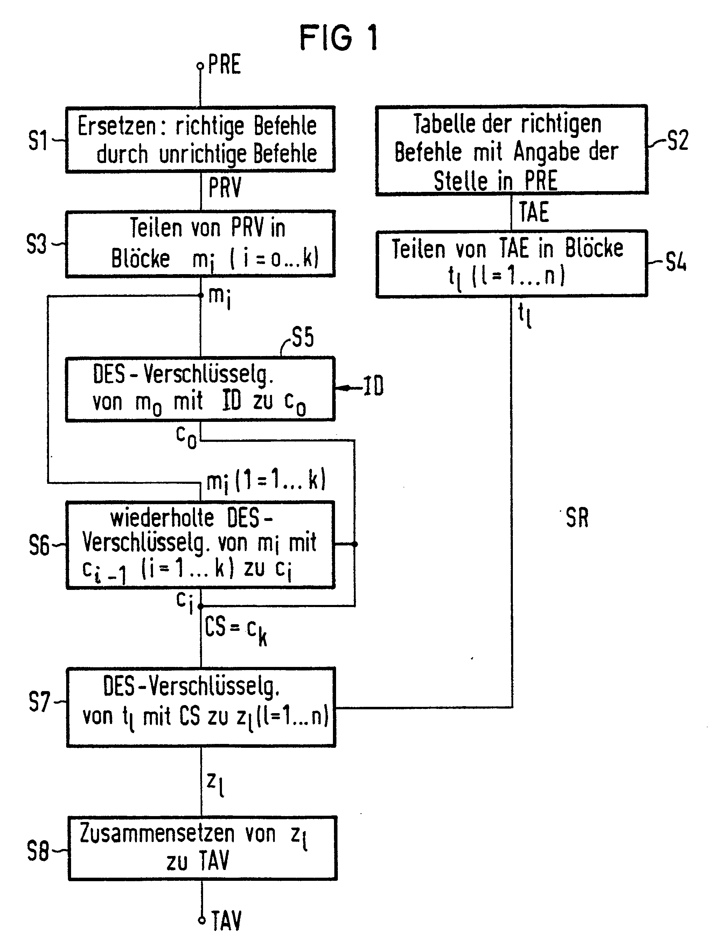

In Fig. 1 sind die Verfahrensschritte gezeigt, die auf der Sendeseite beim Senderechner SR durchgeführt werden, um das Programm zu verschlüsseln.

In einem ersten Schritt S1 werden in dem ursprünglichen Programm PRE einige ausgewählte Befehle, z.B. Sprungbefehle, durch ähnliche aber unrichtige Befehle ersetzt. Dabei entsteht dann das veränderte Programm PRV. Im Schritt S2 werden in einer ersten Tabelle die richtigen Befehle aufgenommen und weiterhin festgelegt, an welcher Stelle des ursprünglichen Programms PRE diese Befehle stehen. Die erste Tabelle ist mit TAE bezeichnet.

Im Schritt S3 wird nun das veränderte Programm PRV in Blöcke $m_i$ von z.B. jeweils 64 bit aufgeteilt ($i = 0...k$). Entsprechendes wird mit der ersten Tabelle TAE durchgeführt. Hier wird im Schritt S4 die Tabelle TAE in Blöcke $t_l$ ($l = 1...n$) von ebenfalls z.B. 64 bit aufgeteilt.

Nun erfolgt die Erzeugung der ersten Prüfsumme. Im Schritt S5 wird der erste Block $m_0$ des veränderten Programms PRV mit Hilfe des ersten Schlüssels ID einer DES Verschlüsselung unterzogen. Dabei entsteht ein erster Wert $C_0$. Im Schritt S6 wird der nächste Block $m_1$ des veränderten Programms PRV nach dem DES Verfahren verschlüsselt. Nur wird diesmal als Schlüssel der erste Wert $C_0$ der vorhergehenden Verschlüsselung des Blockes $m_0$ herangezogen. Dabei entsteht der zweite Wert $C_1$. Dieser Vorgang wiederholt sich nunmehr solange, bis der letzte Block $m_k$ des veränderten Programms PV mit dem Wert der vorhergehenden Verschlüsselung nach dem DES Verfahren verknüpft worden ist und somit der Wert $C_k$ entstanden ist. Das heißt der Block $m_i$ des veränderten Programms PRV wird jeweils mit $G_{i-1}$ nach dem DES Verfahren zu $C_i$ verknüpft. Dieser Vorgang ist dann beendet, wenn der Block $m_k$ bearbeitet ist und der Wert $C_k$ entstanden ist. Dieser Wert $C_k$ entspricht der ersten Prüfsumme CS.

Die erste Prüfsumme CS wird nun weiterhin zur Verschlüsselung der ersten Tabelle TAE verwendet. Für diese Verschlüsselung wird wiederum das DES-Verfahren verwendet. Dazu werden die einzelnen Blöcke $t_l$ der ersten Tabelle TAE jeweils nach dem DES-Verfahren mit Hilfe der ersten Prüfsumme CS zu verschlüsselten Blöcken $Z_l$ verknüpft (Schritt S7), die im Schritt S8 zu der verschlüsselten, zweiten Tabelle TAV zusammengesetzt wird.

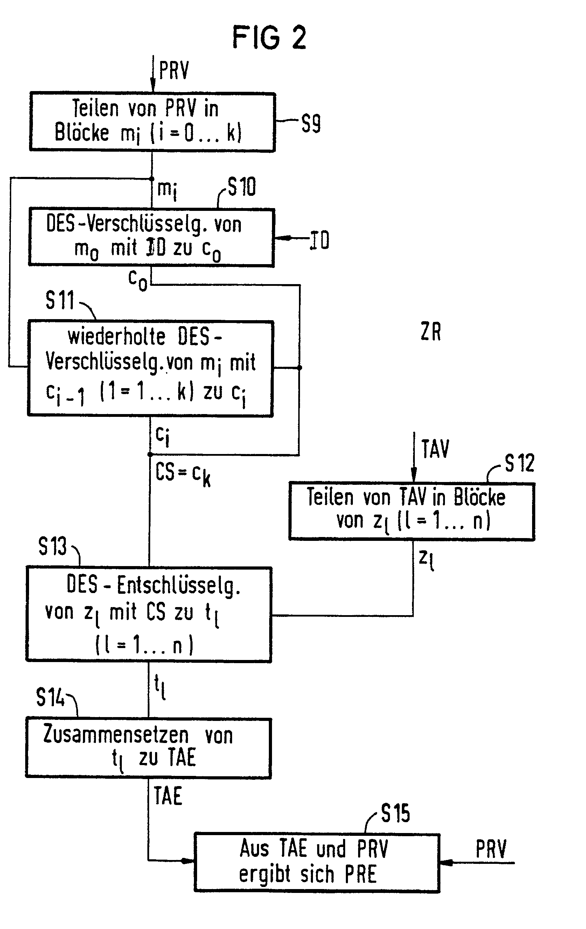

Fig. 2 zeigt, wie die Entschlüsselung beim Zielrechner ZR erfolgt. Dem Zielrechner ZR wird das verschlüsselte Programm oder veränderte Programm PRV übergeben und die verschlüsselte Tabelle oder zweite Tabelle TAV.

Der Zielrechner ZR bildet nun ebenfalls aus dem geänderten Programm PRV eine Prüfsumme, die zweite Prüfsumme. Dazu wird im Schritt S9 zunächst das veränderte Programm PRV in Blöcke $m_i$ von jeweils z.B. 64 bit aufgeteilt, der Block $m_0$ im Schritt S10 nach dem DES-Verfahren mit Hilfe des Schlüssels ID zu $C_0$ verschlüsselt, anschließend im Schritt S11 der Block $m_1$ mit Hilfe von $C_0$ nach dem DES-Verfahren weiter verschlüsselt und dieser Vorgang entsprechend dem Schritt S6 der Fig. 1 so lange durchgeführt, bis der Block $m_k$ verschlüsselt ist. Als Ergebnis dieser Komprimierung entsteht dann die zweite Prüfsumme CS = $C_k$, die mit der ersten Prüfsumme nach Fig. 1 identisch ist, wenn die Schlüssel ID (Schritt S5, Schritt S10) identisch sind.

Nunmehr kann aus der Prüfsumme CS beim Zielrechner ZR wieder die erste Tabelle erzeugt werden. Dazu wird die Transformationsfunktion verwendet, die schon zur Verschlüsselung der ersten Tabelle TAE verwendet worden ist. Zunächst wird also beim Zielrechner ZR die zweite Tabelle TAV wieder in Blöcke $Z_l$ (l = 1 ... n) von z.B. jeweils 64 bit aufgeteilt (Schritt S12) und anschließend erfolgt im Schritt S13 die Entschlüsselung nach dem DES-Verfahren. Das heißt die einzelnen Blöcke $Z_l$ werden mit der zweiten Prüfsumme CS als Schlüssel entschlüsselt. Dabei entstehen die einzelnen Blökke $t_l$, die im Schritt S14 wieder zur ersten Tabelle TAE zusammengesetzt werden.

Aus der ersten Tabelle TAE und aus dem geänderten Programm PRV kann im Schritt S15 wieder das ursprüngliche Programm PRE entwickelt werden. Dieses ursprüngliche Programm PRE kann dann im Zielrechner ZR laufen.

Im Ausführungsbeispiel der Fig. 1 und der Fig. 2 wird das DES-Verfahren jeweils zweimal beim Senderechner SR und beim Zielrechner ZR verwendet. Mit Hilfe des DES-Verfahrens wird zunächst das veränderte Programm PRV zu einer Prüfsumme CS komprimiert, wobei bei der ersten Verschlüsselung der Schlüssel ID verwendet wird. Weiterhin wird das DES-Verfahren zur Verschlüsselung der ersten Tabelle bzw. zur Entschlüsselung der zweiten Tabelle verwendet, wobei als Schlüssel jeweils die Prüfsumme verwendet wird. Bei der Verschlüsselung der ersten Tabelle bzw. bei der Entschlüsselung der zweiten Tabelle kann als Transformationsfunktion auch eine andere Funktion verwendet werden, z.B. die Exklusiv-ODER-Funktion. Es muß nur gewährleistet sein, daß die herangezogene Funktion eine umkehrbare kryptografisch sichere Transformationsfunktion ist.

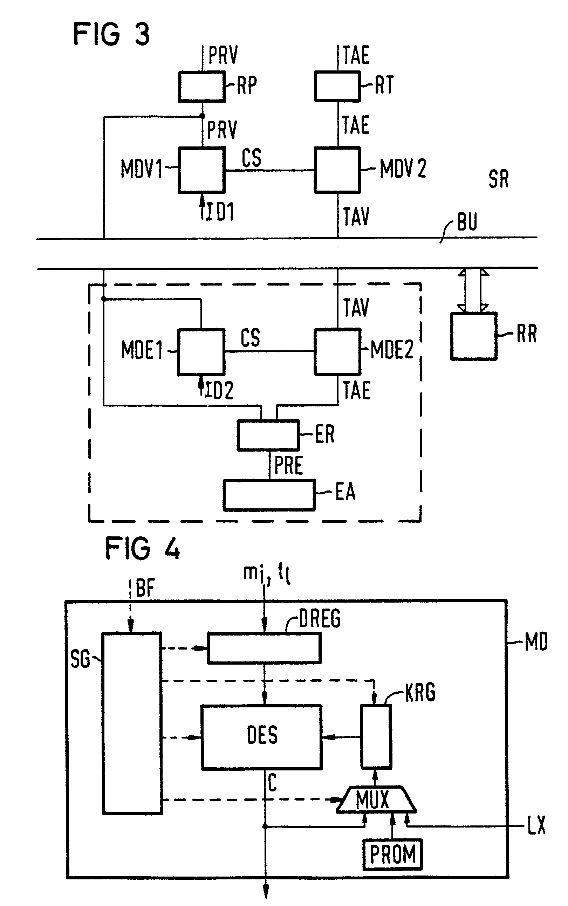

Aus Fig. 3 ergibt sich das Zusammenwirken des Senderechners SR und des Zielrechners ZR. Diese sind z.B. über einen Bus BU verbunden, an dem noch weitere Rechner RR angeschlossen sind. Eine Übertragung der Daten vom Senderechner zu den Zielrechnern kann z.B. auch über Magnetband oder Magnetplatte erfolgen.

Im Senderechner SR wird das veränderte Programm PRV blockweise in einem Register RP gespeichert, entsprechend wird die erste Tabelle TAE blockweise in einem Register RT gespeichert. Vom Register RP wird das veränderte Programm PRV dem Bus BU zugeführt, es wird weiterhin einem Verschlüsselungsbaustein MDV1 zugeführt, an dem der Schlüssel ID1 anliegt. Der Verschlüsselungsbaustein MDV1 komprimiert das veränderte Programm PRV zur Prüfsumme CS. Diese Prüfsumme CS wird nun dazu verwendet, um die erste Tabelle TAE zu verschlüsseln. Dies erfolgt im zweiten Verschlüsselungsbaustein MDV2. Das Ergebnis der Verschlüsselung ist dann die zweite Tabelle TAE, die dem Bus BU zugeführt wird.

Der Zielrechner ZR erhält vom Bus BU das veränderte Programm PRV und die verschlüsselte Tabelle TAV. Der Zielrechner ZR komprimiert das veränderte Programm PRV im Verschlüsselungsbaustein MDE1 mit Hilfe des Schlüssels ID2 zur zweiten Prüfsumme CS. Wenn der Schlüssel ID2 im Zielrechner ZR und der Schlüssel ID1 im Senderechner SR identisch sind, sind auch die Prüfsummen CS im Senderechner SR und im Zielrechner ZR identisch. Die Prüfsumme CS wird nun im Zielrechner ZR dazu verwendet, um die verschlüsselte Tabelle TAV wieder zu entschlüsseln. Dies geschieht im Entschlüsselungsbaustein MDE2 mit Hilfe der Prüfsumme CS als Schlüssel. Am Ausgang des Entschlüsselungsbausteins MDE2 wird die erste Tabelle TAE abgegeben. Aus der ersten Tabelle TAE und dem veränderten Programm PRV kann dann leicht wieder das ursprüngliche Programm gebildet werden, das z.B. im Register ER gespeichert wird. Das ursprüngliche Programm PRE kann dann in den weiteren Einheiten EA des Zielrechners ZR verarbeitet werden.

Rechner PR, die nicht den Schlüssel ID1 (≡ ID2) kennen, können dagegen das veränderte Programm PRV nicht mehr in das ursprüngliche Programm PRE verwandeln und können somit das Programm PRE nicht verwenden.

Aus Fig. 4 ergibt sich ein möglicher Aufbau des Verschlüsselungsbausteins MDV bzw. des Entschlüsselungsbausteins MDE. Im Baustein ist zunächst der DES Funktionsblock DES enthalten, der in bekannter Weise aufgebaut ist (vgl. Electronics, 21.6.1979, S.107 ff ). Mit dem DES Funktionsblock DES ist ein Datenregister DREG verbunden, in dem die zu verschlüsselnden Daten zwischengespeichert werden. Dieses Datenregister DREG kann z.B. 64 bit breit sein, um jeweils einen Block m des Programms oder einen Block t der Tabelle aufzunehmen. An den DES Funktionsblock DES ist weiterhin ein Schlüsselregister KRG angeschlossen, in dem der bei dem DES-Verfahren verwendete Schlüssel eingespeichert wird. Um den Baustein vielfältig verwendbar zu machen, ist vor dem Schlüsselregister KRG ein Multiplexer MUX angeordnet, über den einer von drei Eingängen zum Schlüsselregister KRG durchgeschaltet werden können. Es ist dabei möglich, den Ausgang des Funktionsblocks DES zum Schlüsselregister KRG durchzuschalten, es ist weiterhin möglich, ein an eine externe Leitung LX angelegten Schlüssel ID zum Schlüsselregister zu übertragen und schließlich kann ein Festspeicher PROM mit dem Schlüsselregister verbunden werden. Im Festspeicher PROM kann dann der Schlüssel gespeichert sein, der von außen nicht beeinflußbar und nicht zugänglich sein darf.

Die Steuerung des Multiplexers MUX, des Funktionsblocks DES und der Datenregister DREG und KRG übernimmt eine Steuereinheit SG, die entsprechend den der Steuereinheit SG zugeführten Befehlen BF Steuersignale erzeugt. Zum Beispiel können folgende Befehle BF verwendet werden:

Lade Datenregister DREG, um Daten $m_i$, $t_i$ in das Datenregister einzuspeichern;

Lade Schlüsselregister KRG, z.B. mit dem Schlüssel über die externe Leitung LX,

Lade Schlüsselregister KRG mit dem Inhalt des Festspeichers PROM,

Lade Schlüsselregister KRG mit dem Ausgangswert vom Funktionsblock DES,

Verschlüssele oder Entschlüssele die am Funktionsblock anliegenden Daten mit dem Schlüssel ID.

Der Verschlüsselungsbaustein MD wird beim Senderechner SR z.B. auf folgende Weise verwendet:

Das veränderte Programm PRV wird in 64 bit breiten Blöcken $m_0$ bis $m_k$ nacheinander in das Datenregister DRG eingespeichert. In das Schlüsselregister KRG wird über die Leitung LX der Schlüssel ID des Zielrechners ZR geladen. Anschließend erfolgt die DES Verschlüsselung im Funktionsblock DES. Dann wird das Schlüsselregister KRG mit dem Ausgangswert C des Funktionsblocks DES geladen. In das Datenregister wird der Block $m_1$ übernommen, der dann im Funktionsblock DES mit dem Schlüssel $C_0$ verschlüsselt wird. Der letzte Schritt wird solange wiederholt, bis der Block $m_k$ verarbeitet ist. Dann erscheint als Ausgangswert C des Funktionsblocks DES die Prüfsumme. Diese wird ebenfalls in das Schlüsselregister KRG übernommen. Mit der Prüfsumme als Schlüssel kann dann die erste Tabelle verschlüsselt werden. Dazu werden die einzelnen Blöcke $t_i$ an das Datenregister DREG nacheinander angelegt und von dort dem Funktionsblock DES zugeführt, in dem die Verschlüsselung mit Hilfe der Prüfsumme als Schlüssel erfolgt. Am Ausgang des Funktionsblockes DES wird dann die verschlüsselte Tabelle in

Blöcken $Z_i$ abgegeben. Der letzte Schritt wird ebenfalls solange durchgeführt, bis der letzte Block $t_n$ der ersten Tabelle verschlüsselt ist.

Die Verwendung des Verschlüsselungsbausteins MD beim Zielrechner SR kann in ähnlicher Weise erfolgen. Unterschiedlich ist nur, daß der Schlüssel ID diesmal vom Festspeicher PROM in das Schlüsselregister KRG geladen wird, daß dem Datenregister DREG die Blöcke $Z_i$ nacheinander zugeführt wird und daß dann blockweise die Entschlüsselung von $Z_i$ mit der Prüfsumme durchgeführt wird, die vorher mit Hilfe des im Festspeicher PROM gespeicherten Schlüssel gebildet worden ist.

Der Baustein MD kann also sowohl für die Verschlüsselung, als auch für die Entschlüsselung verwendet werden. Er kann sowohl für die Komprimierung des veränderten Programms PRV zur Prüfsumme CS als auch zur Verschlüsselung der Tabelle TAE bzw. Entschlüsselung der Tabelle TAV verwendet werden.

Bei der vorgehend beschriebenen Anwendung des Bausteins MD wurde das gesamte Programm über den Baustein geführt. Es ist auch möglich, innerhalb eines Programms nur einzelne Befehle, z.B. Sprungbefehle zu verändern. Tritt dann im Programmablauf ein derartiger veränderter Befehl auf, dann wird dieser veränderte Befehl dem Baustein MD zugeführt, der dann diesen Befehl entschlüsselt. Dazu wird der im Festspeicher PROM gespeicherte Schlüssel verwendet. Nur der Rechner, der den richtigen Schlüssel hat, kann den veränderten Befehl so entschlüsseln, daß sich ein sinnvoller Programmablauf ergibt.

Das erfindungsgemäße Verfahren ist nur dann sicher, wenn der verwendete Schlüssel ID geheimbleibt. Es muß also verhindert werden, daß aus dem Baustein MD der Schlüssel entnommen werden kann. Dies kann dadurch verhindert werden, daß der Festspeicher PROM im Baustein MD integriert ist und nur intern gelesen werden kann.Weiterhin könnte der Baustein in einem Plastikmaterial vergossen sein, um den Zugriff zu den Festspeicheranschlüssen schwierig zu machen. Der Baustein MD müßte zusätzlich mit dem Zielrechner so verbunden sein, daß er ohne Zerstörung z.B. eines Siegels von diesem nicht entfernt werden kann.

## Patentansprüche

1. Verfahren zur Verhinderung des Ablaufs eines Programms auf für den Ablauf dieses Programms nicht zugelassenen Rechnen, dadurch **gekennzeichnet,** daß das Programm (PRE) durch Ersetzen einzelner Befehle durch unrichtige Befehle in ein verändertes Programm (PRV) umgewandelt wird, daß in einer ersten Tabelle (TAE) festgehalten wird, welche Befehle unrichtig sind und wie die richtigen Befehle lauten, daß das veränderte Programm (PRV) mit Hilfe eines ersten Schlüssels (ID1) zu einer ersten Prüfsumme (CS) komprimiert wird, daß die erste Tabelle (TAE) mit der ersten Prüfsumme nach einer umkehrbaren, kryptografisch sicheren Transformationsfunktion zu einer zweiten Tabelle (TAV) verknüpft wird, daß das veränderte Programm (PRV) und die zweite Tabelle (TAV) den Rechnern (ZR, RR) zugeführt wird, daß in den Rechnern das veränderte Programm mit einem zweiten Schlüssel (ID2) zu einer zweiten Prüfsumme komprimiert wird, und daß die zweite Prüfsumme mit der zweiten Tabelle nach der Transformationfunktion verknüpft wird, wobei als Ergebnis der Verknüpfung nur dann wieder die erste Tabelle (TAE) entsteht, wenn der zweite Schlüssel (ID2) mit dem ersten Schlüssel (ID1) identisch ist.

2. Verfahren nach Anspruch 1, dadurch **gekennzeichnet,** daß das veränderte Programm (PRV) in Blöcken ($m_i$) aufgeteilt wird, daß der erste Block ($m_0$) nach dem DES-Verfahren mit dem Schlüssel (ID) zu einem ersten Wert ($C_0$) verschlüsselt wird, daß der zweite Block ($m_1$) nach dem DES-Verfahren mit dem ersten Wert ($C_0$) als Schlüssel zu einem zweiten Wert ($C_1$) verschlüsselt wird, daß aufeinanderfolgend jeder Block ($m_i$) des veränderten Programms nach dem DES-Verfahren mit dem Wert ($C_{i-1}$) der vorhergehenden Verschlüsselung als Schlüssel verschlüsselt wird und daß der Wert ($C_k$) der Verschlüsselung des letzten Blockes ($m_k$) mit dem Wert ($C_{k-1}$) der vorhergehenden Verschlüsselung die Prüfsumme (CS) darstellt.

3. Verfahren nach Anspruch 2, dadurch **gekennzeichnet,** daß zur Erzeugung der ersten Prüfsumme der dem ausgewählten Zielrechner zugeordnete Schlüssel (ID2) verwendet wird.

4. Verfahren nach Anspruch 2, dadurch **gekennzeichnet,** daß zur Erzeugung der zweiten Prüfsumme der im Zielrechner (ZR) gespeicherte Schlüssel (ID2) verwendet wird.

5. Verfahren nach einem der Ansprüche 1 bis 4 dadurch **gekennzeichnet,** daß als Transformationsfunktion das DES-Verfahren verwendet wird.

6. Verfahren nach einem der Ansprüche 1 bis 5, dadurch **gekennzeichnet,** daß die erste Tabelle (TAE) in Blöcke ($t_i$) aufgeteilt wird, daß jeder Block der ersten Tabelle mit Hilfe der ersten Prüfsumme (CS) als Schlüssel nach dem DES-Verfahren verschlüsselt wird und daß die verschlüsselten Blöcke ($Z_i$) zur zweiten Tabelle (TAV) zusammengesetzt werden.

7. Verfahren nach Anspruch 6, dadurch **gekennzeichnet,** daß die zweite Tabelle (TAV) in Blöcke ($Z_i$) aufgeteilt wird, daß jeder Block der zweiten Tabelle (TAV) mit Hilfe der zweiten Prüfsumme als Schlüssel nach dem DES-Verfahren entschlüsselt wird, und daß die entschlüsselten Blöcke zur ersten Tabelle (TAE) zusammengesetzt werden.

8. Verfahren nach einem der vorhergehenden Ansprüche, dadurch **gekennzeichnet,** daß die Erzeugung der Prüfsumme bzw. der zweiten Tabelle aus der ersten Tabelle oder der ersten Tabelle aus der zweiten Tabelle bzw. die Entschlüsselung der geänderten Befehle in einem Verschlüsselungsbaustein (MD) erfolgt, der einen DES Funktionsblock (DES) enthält.

9. Schaltungsanordnung zur Durchführung des Verfahrens nach Anspruch 8, **gekennzeichnet** durch den Verschlüsselungsbaustein (MD), bestehend aus einem Datenregister (DREG), in das die zu bearbeitenden Daten blockweise eingespeichert werden und das mit dem Funktionsblock (DES) verbunden ist, aus einem Schlüsselregister (KRG) zur Aufnahme des Schlüssels, das mit dem Funktionsblock (DES) verbunden ist, und aus einer Steuereinheit (SG), die zur Steuerung mit dem Datenregister, dem Funktionsblock und dem Schlüsselregister verbunden ist.

10. Schaltungsanordnung nach Anspruch 9, dadurch **gekennzeichnet,** daß der Schlüssel der Zielrechner (ZR) in einem von außen nicht lesbaren und löschbaren Festspeicher (PROM) gespeichert ist, der mit dem Schlüsselregister (KRG) verbunden ist.

11. Schaltungsanordnung nach Anspruch 10, dadurch **gekennzeichnet,** daß vor dem Schlüsselregister (KRG) ein mit der Steuereinheit (SG) verbundener Multiplexer (MUX) angeordnet ist, von dem jeweils ein Eingang mit dem Ausgang des Funktionsblockes (DES), mit dem Ausgang des Festspeichers (PROM) und mit einer externen Leitung (LX) zum Anlegen eines Schlüssels verbunden ist, wobei in Abhängigkeit eines Steuersignals von der Steuereinheit (SG) einer der Eingänge zum Schlüsselregister (KRG) durchgeschaltet wird.

12. Schaltungsanordnung nach einem der Ansprüche 9 bis 11, dadurch **gekennzeichnet,** daß der Verschlüsselungsbaustein (MD) mit dem Zielrechner (ZR) so verbunden ist, daß eine Trennung erkennbar ist.

## Claims

1. Process for preventing the execution of a program on computers not authorized to execute said program, characterized in that the program (PRE) is converted into an altered program (PRV) by replacing individual instructions by incorrect instructions, in that it is recorded in a first table (TAE) which instructions are incorrect and what the correct instructions are, in that the altered program (PRV) is compressed with the aid of a first key (ID1) to form a first checksum (CS), in that the first table (TAE) is combined with the first checksum in accordance with a reversible, cryptographically secure transformation function to form a second table (TAV), in that the altered program (PRV) and the second table (TAV) are supplied to the computers (ZR, RR), in that the altered program is compressed with a second key (ID2) to form a second checksum in the computers, and in that the second checksum is combined with the second table in accordance with the transformation function, the result of the combination only producing the first table (TAE) again if the second key (ID2) is identical to the first key (ID1).

2. Process according to Claim 1, characterised in that the altered program (PRV) is divided into blocks $(m_i)$, in that the first block $(m_0)$ is encrypted in accordance with the DES method with the key (ID) to form a first value $(C_0)$, in that the second block $(m_1)$ is encrypted in accordance with the DES method with the first value $(C_0)$ as key to form a second value $(C_1)$, in that each block $(m_i)$ of the altered program is successively encrypted in accordance with the DES method with the value $(C_{i-1})$ of the preceding encryption as key, and in that the value $(C_k)$ of the encryption of the last block $(m_k)$ with the value $(C_{k-1})$ of the preceding encryption represents the checksum (CS).

3. Process according to Claim 2, characterised in that the key (ID2) assigned to the selected target computer is used for generating the first checksum.

4. Process according to Claim 2, characterised in that the key (ID2) stored in the target computer (ZR) is used for generating the second checksum.

5. Process according to one of Claims 1 to 4, characterised in that the DES method is used as the transformation function.

6. Process according to one of Claims 1 to 5, characterised in that the first table (TAE) is divided into blocks $(t_1)$, in that each block of the first table is encrypted with the aid of the first checksum (CS) as key in accordance with the DES method, and in that the encrypted blocks $(Z_1)$ are combined to form the second table (TAV).

7. Process according to Claim 6, characterised in that the second table (TAV) is divided into blocks $(Z_1)$, in that each block of the second table (TAV) is decrypted with the aid of the second checksum as key in accordance with the DES method, and in that the decrypted blocks are combined to form the first table (TAE).

8. Process according to one of the preceding claims, characterised in that the generation of the checksum or of the second table from the first table or of the first table from the second table, or the decryption of the altered instructions is carried out in an encrytion module (MD) which contains a DES function block (DES).

9. Circuit arrangement for carrying out the process according to Claim 8, characterised by the encrytion module (MD), consisting of a data register (DREG), into which the data to be processed are written block-by-block and which is connected to the function block (DES), of a key register (KRG) for storing the key, which is connected to the function block (DES), and of a control unit (SG) which is connected to the data register, the function block and the key register for the purpose of control.

10. Circuit arrangement according to Claim 9, characterised in that the key of the target computer (ZR) is stored in a read-only memory (PROM) which can neither be read nor erased from the outside, and which is connected to the key register (KRG).

11. Circuit arrangement according to Claim 10, characterised in that a multiplexer (MUX) connected to the control unit (SG) is arranged before the key register (KRG), one input of which multiplexer is in each case connected to the output of the function block (DES), to the output of the read-only memory (PROM) and to an external line (LX) for the application of a key, one of the inputs to the key register (KRG) being switched through by the control unit (SG) as a function of a control signal.

**12.** Circuit arrangement according to one of Claims 9 to 11, characterised in that the encrytion module (MD) is connected to the target computer (ZR) in such a way that a disconnection is detectable.

**Revendications**

**1.** Procédé pour empêcher l'exécution d'un programme dans des ordinateurs non autorisés à exécuter ce programme, caractérisé par le fait qu'on convertit le programme (PRE), par remplacement d'instructions individuelles par des instructions incorrectes, en un programme modifié (PRV), que l'on conserve dans un premier tableau (TAE) les instructions qui sont incorrectes et l'expression des instructions correctes, que l'on comprime le programme modifié (PR2) à l'aide d'un premier code (ID1) pour former une première somme de contrôle (CS), que l'on combine le premier tableau (TAE) avec la première somme de contrôle selon une fonction de transformation réversible, sûre du point de vue cryptographique, pour obtenir un second tableau (TAV), que l'on envoie le programme modifié (PRV) et le second tableau (TAV) aux ordinateurs (ZR,RR), que l'on comprime, dans les ordinateurs, le programme modifié avec un second code (ID2) pour former une seconde somme de contrôle et que l'on combine la seconde somme de contrôle avec le second tableau conformément à la fonction de transformation, et que l'on obtient à nouveau le premier tableau (TAE) en tant que résultat de la combinaison uniquement lorsque le second code (ID2) est identique au premier code (ID1).

**2.** Procédé suivant la revendication 1, caractérisé par le fait que l'on subdivise le programme modifié (PRV) en blocs $(m_i)$, que l'on code le premier bloc $(m_0)$ selon le procédé DES en utilisant le code (ID) pour obtenir une première valeur $(C_0)$, que l'on code le second bloc $(m_1)$ selon le procédé DES avec la première valeur $(C_0)$ en tant que code pour obtenir une seconde valeur $(C_1)$, que l'on code successivement chaque bloc $(m_i)$ du programme modifié selon le procédé DES avec la valeur $(C_{i-1})$ du codage précédent en tant que code et que la valeur $(c_k)$ du codage du dernier bloc $(m_k)$ avec la valeur $(C_{k-1})$ du codage précédent représente la somme de contrôle (CS).

**3.** Procédé suivant la revendication 2, caractérisé par le fait que pour la production de la première somme de contrôle, on utilise le code (ID2) associé à l'ordinateur de destination sélectionné.

**4.** Procédé suivant la revendication 2, caractérisé par le fait que pour l'obtention de la seconde somme de contrôle, on utilise le code (ID2) mémorisé dans l'ordinateur de destination (ZR).

**5.** Procédé suivant l'une des revendications 1 à 4, caractérisé par le fait qu'on utilise comme fonction de transformation le procédé DES.

**6.** Procédé suivant l'une des revendications 1 à 5, caractérisé par le fait qu'on subdivise le premier tableau (TAE) en blocs $(t_1)$, que l'on code chaque bloc du premier tableau à l'aide de la première somme de contrôle (CS) en tant que code, selon le procédé DES, et qu'on réunit les blocs codés $(Z_1)$ pour former le second tableau (TRV).

**7.** Procédé suivant la revendication 6, caractérisé par le fait qu'on subdivise le second tableau (TAV) en blocs $(Z_1)$, qu'on décode chaque bloc du second tableau (TAV) à l'aide d'une seconde somme de contrôle en tant que code, selon le procédé DES, et qu'on réunit les blocs décodés pour former le premier tableau (TAE).

**8.** Procédé suivant l'une des revendications précédentes, caractérisé par le fait que l'obtention de la somme de contrôle ou du second tableau à partir du premier tableau ou bien du premier tableau à partir du second tableau ou le décodage des instructions modifiées est réalisé dans un module de codage (MD), qui contient un bloc de fonction (DES).

**9.** Montage pour la mise en oeuvre du procédé suivant la revendication 8, caractérisé par le module de codage (MD) constitué par un registre de données (DREG), dans lequel les données devant être traitées sont mémorisées par blocs et qui est raccordé au bloc de fonction (DES), par un registre de code (KRG) servant à recevoir le code et qui est raccordé au bloc de fonction (DES), et par une unité de commande (SG) qui, pour la commande avec le registre de données, est raccordée au bloc de fonction et au registre de codes.

**10.** Montage suivant la revendication 1, caractérisé par le fait que le code des ordinateurs de destination (ZR) est mémorisé dans une mémoire morte (PROM) non lisible ni effaçable de l'extérieur et qui est raccordée au registre de code (KRG).

11. Montage suivant la revendication 10, caractérisé par le fait qu'en amont du registre de codes (KRG) est disposé un multiplexeur (MUX) qui est raccordé à l'unité de commande (SG) et dont une entrée est raccordée respectivement à la sortie du bloc de fonction (DES), à la sortie de la mémoire morte (PROM) et à une ligne externe (LX) servant à appliquer un code, auquel cas l'une des entrées est interconnectée directement au registre de code (KRG) en fonction d'un signal de commande, par l'unité de commande (SG).

12. Montage suivant l'une des revendications 9 à 11, caractérisé par le fait que le module de codage (MD) est raccordé à l'ordinateur de destination (ZR) de telle sorte qu'une séparation est identifiable.

## FIG 1

○ PRE

S1 — **Ersetzen: richtige Befehle durch unrichtige Befehle**

PRV

S3 — **Teilen von PRV in Blöcke $m_i$ ( $i = 0 \ldots k$)**

○ $m_i$

S5

**DES - Verschlüsselg. von $m_0$ mit ID zu $c_0$** — ID

$c_0$

$m_i$ ($1 = 1 \ldots k$)

S6 — **wiederholte DES - Verschlüsselg. von $m_i$ mit $c_{i-1}$ ($i = 1 \ldots k$) zu $c_i$**

$c_i$

$CS = c_k$

S7 — **DES - Verschlüsselg. von $t_l$ mit CS zu $z_l$ ($l = 1 \ldots n$)**

$z_l$

S8 — **Zusammensetzen von $z_l$ zu TAV**

○ TAV

S2 — **Tabelle der richtigen Befehle mit Angabe der Stelle in PRE**

TAE

S4 — **Teilen von TAE in Blöcke $t_l$ ($l = 1 \ldots n$)**

$t_l$

SR

## FIG 2

$\downarrow$ PRV

Teilen von PRV in
Blöcke $m_i$ $(i = 0 \dots k)$ — S9

$m_i$ — S10

DES-Verschlüsselg. von
$m_0$ mit ID zu $c_0$ ← ID

$c_0$

S11

wiederholte DES-
Verschlüsselg. von $m_i$ mit
$c_{i-1}$ $(1 = 1 \dots k)$ zu $c_i$

ZR

$c_i$

$CS = c_k$

TAV — S12

Teilen von TAV in Blöcke
von $z_l$ $(l = 1 \dots n)$

$z_l$

S13

DES-Entschlüsselg.
von $z_l$ mit CS zu $t_l$
$(l = 1 \dots n)$

$t_l$

S14

Zusammensetzen von
$t_l$ zu TAE

TAE

S15

Aus TAE und PRV
ergibt sich PRE ← PRV

11

## FIG 3

## FIG 4